(19) Europäisches Patentamt
European Patent Office
Office européen des brevets

(11) **EP 2 458 321 B1**

(12) **EUROPÄISCHE PATENTSCHRIFT**

(45) Veröffentlichungstag und Bekanntmachung des Hinweises auf die Patenterteilung:
**08.01.2014 Patentblatt 2014/02**

(51) Int Cl.:
*G01B 9/02* (2006.01)     *G01B 11/14* (2006.01)
*G01B 11/27* (2006.01)     *G01M 11/02* (2006.01)

(21) Anmeldenummer: **11009186.5**

(22) Anmeldetag: **19.11.2011**

(54) **Verfahren und Vorrichtung zur Messung von Abständen zwischen optischen Flächen eines optischen Systems**

Method and device for measuring distances between optical areas of an optical system

Procédé et dispositif de mesure d'écarts entre des surfaces optiques d'un système optique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.11.2010 DE 102010053423**

(43) Veröffentlichungstag der Anmeldung:
**30.05.2012 Patentblatt 2012/22**

(73) Patentinhaber: **Trioptics GmbH**
**22880 Wedel (DE)**

(72) Erfinder:
• **Heinisch, Josef**
**22880 Wedel (DE)**
• **Krey, Stefan**
**25421 Pinneberg (DE)**
• **Dumitrescu, Eugen**
**22880 Wedel (DE)**
• **Ruprecht, Aiko**
**22880 Wedel (DE)**
• **Langehanenberg, Patrik**
**22607 Hamburg (DE)**

(74) Vertreter: **Schwanhäußer, Gernot et al**
**Ostertag & Partner**
**Patentanwälte**
**Epplestr. 14**
**70597 Stuttgart (DE)**

(56) Entgegenhaltungen:
**JP-A- 2002 213 926     JP-A- 2004 069 594**

• **RAINER WILHELM ET AL: "On-axis, non-contact measurement of glass thicknesses and airgaps in optical systems with submicron accuracy", PROCEEDINGS OF SPIE, Bd. 6616, 1. Januar 2007 (2007-01-01), Seiten 66163P-66163P-12, XP55019691, ISSN: 0277-786X, DOI: 10.1117/12.725972**
• **J. HEINISCH ET AL: "Novel technique for measurement of centration errors of complex completely mounted multi-element objective lenses", PROCEEDINGS OF SPIE, Bd. 6288, 1. Januar 2006 (2006-01-01), Seiten 628810-628810-7, XP55019692, ISSN: 0277-786X, DOI: 10.1117/12.693356**

**Beschreibung**

HINTERGRUND DER ERFINDUNG

1. Gebiet der Erfindung

Die Erfindung betrifft ein Verfahren und eine Vorrichtung zur Messung von Abständen zwischen optischen Flächen von ein- oder mehrlinsigen optischen Systemen, die im Allgemeinen mit Bezug auf die optische Achse des optischen Systems angegeben werden, nach dem Oberbegriff des Anspruchs 1 beziehungsweise des Anspruchs 6.

Ein Verfahren sowie eine Vorrichtung dieser Art sind aus einem Aufsatz von R. Wilhelm et al. mit dem Titel "On-axis, non-contact measurement of glass thicknesses and airgaps in optical systems with submicron accuracy", Proc. of SPIE, Vol. 6616 (2007), 66163P-1 bis 66163P-12, bekannt.

2. Beschreibung des Standes der Technik

Zur Messung von Abständen zwischen optischen Flächen eines ein- oder mehrlinsigen optischen Systems ist es bekannt, Kurzkohärenz-Interferometer zu verwenden, wie sie etwa in der FR 2 803 027 A1 und dem vorstehend erwähnten Aufsatz beschrieben sind. Derartige Interferometer enthalten eine Lichtquelle, die Messlicht mit einer sehr kurzen Kohärenzlänge erzeugt. Der Strahlengang des Messlichts wird mit Hilfe eines Strahlteilers in einen Referenzarm und einen Messarm aufgeteilt. Das im Messarm geführte Messlicht wird auf das optische System gerichtet, während die optische Weglänge des im Referenzarm geführten Messlichts mit Hilfe einer beweglichen Spiegelanordnung o. ä. variiert wird. An den optischen Flächen des optischen Systems reflektiertes Messlicht wird mit dem im Referenzarm geführten Messlicht auf einem Photodetektor überlagert. Aus vom Photodetektor erfassten Interferenzerscheinungen kann auf optische Weglängendifferenzen geschlossen werden, die das Messlicht auf seinem Weg zwischen den optischen Flächen zurücklegt. Infolge der kurzen Kohärenzlänge des verwendeten Messlichts treten am Photodetektor nämlich nur dann Interferenzerscheinungen auf, wenn die optischen Weglängen im Referenzarm und im Messarm übereinstimmen.

Messvorrichtungen, die von diesem Messprinzip Gebrauch machen, werden beispielsweise von der Firma FOGALE nanotech, Nimes, Frankreich, angeboten.

Bei der Verwendung von Kurzkohärenz-Interferometern zur Messung von Abständen zwischen optischen Flächen von optischen Systemen ist es allerdings erforderlich, dass das Messlicht möglichst senkrecht auf die optischen Flächen auftrifft. Schon bei leicht verkippten Flächen wird nur noch so wenig Licht zurück in das Interferometer reflektiert, dass keine oder allenfalls - wegen des dann sehr niedrigen Signal-Rausch-Verhältnisses - schwer nachweisbare Interferenzsignale am Photodetektor entstehen. Selbst dann, wenn im Falle verkippter optischer Flächen die Interferenzsignale gut erfasst werden können, so werden letztlich nicht wie gewünscht die Abstände zwischen den optischen Flächen entlang der optischen Achse des optischen Systems, sondern lediglich die Abstände entlang der durch den Messlichtstrahl festgelegten Messrichtung gemessen. Da diese Richtung von der optischen Achse des optischen Systems erheblich abweichen kann, sind die so gewonnen Messwerte nur von geringer Aussagekraft.

Zur Justierung des optischen Systems schlägt der eingangs genannte Aufsatz von R. Wilhelm et al. vor, zunächst eine Halterung für das optische System mit Hilfe einen Prüflichtstrahl zu justieren, der von einem Laserpointer erzeugt wird. Zu diesem Zweck wird auf die Halterung ein Planspiegel gelegt und der Prüflichtstrahl auf diesen gerichtet. Die Halterung wird dann solange ausgerichtet, bis der Prüflichtstrahl in sich zurückreflektiert wird. Anschließend wird das optische System auf die ausgerichtete Halterung aufgesetzt und solange verkippt, bis der Prüflichtstrahl senkrecht auf die dem Interferometer zugewandte optische Fläche trifft und dadurch wieder in sich zurückreflektiert wird.

Aus einem Aufsatz von H. Heinisch et al. mit dem Titel "Novel Technique for Measurement of Centration Errors of Complex, Completely Mounted Multi-Element Objective Lenses", Proc. of SPIE, Vol. 6288 (2006), 628810-1 bis 628810-7, ist bekannt, den Zentrierzustand von optischen Systemen mit Hilfe zweier Autokollimatoren zu erfassen, welche von beiden Seiten des optischen Systems her die Krümmungsmittelpunkte der optischen Flächen messen. Ein weiteres System zur Messung des Zentrierzustandes und der Abstände eines optischen Systems wird in der JP 2004 069 594 beschrieben.

ZUSAMMENFASSUNG DER ERFINDUNG

Aufgabe der Erfindung ist es, eine Vorrichtung und ein Verfahren anzugeben, mit der bzw. mit dem sich zuverlässig und mit hoher Genauigkeit die Abstände zwischen den optischen Flächen eines ein- oder mehrlinsigen optischen Systems messen lassen.

Hinsichtlich des Verfahrens wird diese Aufgabe erfindungsgemäß gelöst durch ein Verfahren mit den in Anspruch 1 angegeben Schritten.

Durch die Erfassung des Zentrierzustands im Schritt a) kann das optische System im Schritt b) so justiert werden, dass die Bezugsachse und damit auch der Messlichtstrahl die optischen Flächen möglichst senkrecht durchtritt. Dies hat zum einen zur Folge, dass erheblich mehr Messlicht zurück in das Interferometer reflektiert wird und zur Interferenz beitragen kann. Zum anderen liegt die optische Achse des optischen Systems dann näher an der Bezugsachse, so dass das Interferometer tatsächlich wie gewünscht die Abstände zwischen den optischen Flächen entlang der optischen Achse und nicht etwa entlang einer dazu ggf. verkippten oder verschobenen Bezugsachse misst.

Erfindungsgemäß werden bei der Erfassung des Zentrierzustands alle optischen Flächen des optischen Systems berücksichtigt. Würde lediglich eine einzige Fläche des optischen Systems bei der Erfassung des Zentrierzustands berücksichtigt, wie dies bei dem Verfahren der Fall ist, das aus dem eingangs genannten Aufsatz von R. Wilhelm et al. bekannt ist, so ließe sich durch die Justierung in Schritt b) im Allgemeinen nicht sicherstellen, dass das optische System zur Bezugsachse mit ausreichender Genauigkeit ausgerichtet ist. Im Falle einer sphärischen optischen Fläche könnte dann allenfalls erreicht werden, dass der Krümmungsmittelpunkt dieser Fläche auf der Bezugsachse zu liegen kommt. Das optische System könnte in diesem Fall aber noch immer um diesen Krümmungsmittelpunkt verkippt und somit nicht zur Bezugsachse zentriert sein.

Erst wenn mindestens zwei oder erfindungsgemäß sogar alle Flächen bei der Erfassung des Zentrierzustands berücksichtigt werden, wird die Mehrdeutigkeit, die bei der Berücksichtigung lediglich einer optischen Fläche entsteht, aufgehoben. Werden die Krümmungsmittelpunkte mindestens zweier optischer Flächen bestimmt, so kann das optische System so ausgerichtet werden, dass beide Krümmungsmittelpunkte auf der Bezugsachse zu liegen kommen. Dadurch wird ein eindeutig definierter Justierungszustand erhalten.

Je mehr Flächen bei der Erfassung des Zentrierzustands berücksichtigt werden, desto besser wird im Allgemeinen die im Schritt b) erreichte Zentrierung des optischen Systems zur Bezugsachse sein. Am genauesten wird der Zentrierzustand des optischen Systems deswegen erfasst, wenn erfindungsgemäß alle optischen Flächen des optischen Systems berücksichtigt werden.

Mit Hilfe des Prüflichtstrahls und des optischen Sensors wird es möglich, den Zentrierzustand des optischen Systems relativ zu der durch den Messlichtstrahl vorgegebenen Bezugsachse qualitativ unter Berücksichtigung aller optischen Flächen mit sehr einfachen Mitteln zu erfassen. Ausgenutzt wird dabei, dass der Prüflichtstrahl an optischen Flächen, auf die er nicht senkrecht auftrifft, gebrochen und dadurch seitlich abgelenkt wird. Die seitliche Ablenkung des Prüflichtstrahls wird von dem ortsauflösenden optischen Sensor der Messvorrichtung erfasst. Je besser die optische Achse des optischen Systems mit der Bezugsachse fluchtet, desto geringer ist die Ablenkung des Prüflichtstrahls beim Durchtritt durch das optische System.

Besonders einfach gelingt bei einer solchen Messung in Transmission die Justierung im Schritt b), wenn während des Erfassen des Ortes, an dem der Prüflichtstrahl, nachdem dieser das optische System vollständig durchtreten hat, auf einen ortsauflösenden optischen Sensor auftrifft, das optische System um die Bezugsachse gedreht wird. Denn während einer solchen Drehung beschreibt der von dem optischen Sensor erfasste Ort eine Kreisbahn um die Bezugsachse. Die Justierung in Schritt b) wird so lange fortgesetzt, bis die Kreisbahn einen minimalen Radius hat. Das optische System ist dann so relativ zu der Bezugsachse ausgerichtet, dass seine optische Achse zumindest im Wesentlichen mit der Bezugsachse fluchtet. Vorteilhaft ist die Drehung insbesondere dann, wenn der Durchstoßpunkt der Bezugsachse auf dem optischen Sensor nicht bekannt ist, so dass auch nicht der Abstand zwischen der Bezugsachse und dem Ort, an dem der Prüflichtstrahl auf den optischen Sensor auftritt, ermittelt werden kann.

Besonders einfach ist es, wenn der Prüflichtstrahl und der Messlichtstrahl von der gleichen Lichtquelle des Interferometers erzeugt werden. In diesem Fall sind somit Prüflichtstrahl und Messlichtstrahl letztlich die "gleichen" Lichtstrahlen, nur dass sie zu unterschiedlichen Zwecken auf das optische System gerichtet werden.

Hinsichtlich der Vorrichtung wird die eingangs genannte Aufgabe gelöst durch eine Vorrichtung mit den Merkmalen des Anspruchs 6. Die bezüglich des Verfahrens genannten Vorteile und vorteilhaften Ausgestaltungen gelten hier entsprechend.

Die Prüflichtquelle kann dabei eine in dem Interferometer angeordnete Lichtquelle zur Erzeugung von Messlicht sein, das zur Messung der Abstände auf das optische System gerichtet wird.

Außerdem kann die Vorrichtung eine Drehmechanik aufweisen, die dazu eingerichtet ist, das optische System um die Bezugsachse zu drehen.

KURZE BESCHREIBUNG DER ZEICHNUNGEN

Weitere Merkmale und Vorteile der Erfindung ergeben sich aus der nachfolgenden Beschreibung der Ausführungsbeispiele anhand der Zeichnungen. Darin zeigen:

Figur 1    einen Meridionalschnitt durch ein mehrlinsiges optisches System, bei dem alle Linsen exakt entlang einer Referenzachse ausgerichtet sind;

Figur 2     eine einzelne Linse aus dem in der Figur 1 gezeigten optischen System, die jedoch gegenüber der Referenzachse verkippt ist;

Figur 3     eine schematische Darstellung der Krümmungsmittelpunkte eines mehrlinsigen optischen Systems;

Figur 4     eine schematische Darstellung wie in der Figur 3, wobei die Krümmungsmittelpunkte jedoch annähernd auf einer von der Referenzachse verschiedenen Geraden liegen;

Figur 5     einen Meridionalschnitt durch eine Messvorrichtung gemäß einem ersten Ausführungsbeispiel der Erfindung;

Figur 6     einen Graphen, in dem die während einer Abstandsmessung von einem Photodetektor erfasste Intensität in Abhängigkeit von der optischen Weglänge aufgetragen ist, die von einem Referenzlichtstrahl eines Interferometers der Messvorrichtung zurückgelegt wird;

Figur 7     einen vergrößerten Ausschnitt aus der Figur 5;

Figur 8     eine Draufsicht auf einen optischen Sensor der Messvorrichtung, auf dem eine kreisförmige Bahn dargestellt ist, die ein Prüflichtstrahl während einer Drehung des Prüflings auf dem Sensor überstreicht;

Figur 9     eine Draufsicht wie Figur 8, jedoch nach Justierung des Prüflings;

Figur 10     ein Flussdiagramm zur Erläuterung wichtiger Schritte des erfindungsgemäßen Verfahrens.

BESCHREIBUNG EINES BEVORZUGTEN AUSFÜHRUNGSBEISPIELS

*1. Einführung*

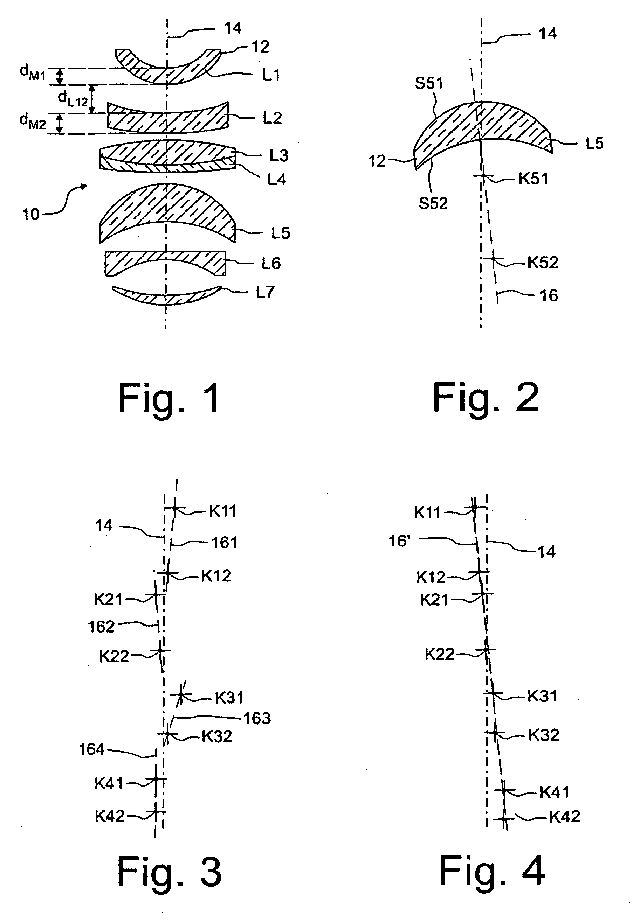

Die Figur 1 zeigt in einem Meridionalschnitt ein insgesamt mit 10 bezeichnetes optisches System, das sieben Linsen L1 bis L7 umfasst. Die beiden Linsen L3 und L4 sind dabei spaltfrei aneinandergefügt und bilden eine als Achromat verwendete Dublette. Die Linsen L1 bis L7 haben einen zylindrisch geschliffenen Linsenrand 12, der jeweils in einer nicht dargestellten Linsenfassung aufgenommen ist.

Im Idealfall sind die Linsen L1 bis L7 so ausgerichtet, dass ihre optischen Achsen alle auf einer gemeinsamen Referenzachse 14 liegen, die gleichzeitig die Symmetrieachse der zylindrischen Linsenränder 12 ist. Die Referenzachse 14 wird dann im Allgemeinen als die optische Achse des optischen Systems 10 bezeichnet. Wenn Abstände zwischen den optischen Flächen des optischen Systems 10 angegeben oder gemessen werden, so beziehen sich diese Angaben oder Messwerte in der Regel auf die Abstände entlang der (hier mit der Referenzachse 14 zusammenfallenden) optischen Achse des optischen Systems 10. Abstände zwischen den optischen Flächen einer einzelnen Linse werden dabei meist als Mittendicken bezeichnet; in der Figur 1 sind die Mittendicken der Linsen L1 und L2 mit $d_{M1}$ bzw. $d_{M2}$ bezeichnet. Abstände zwischen aufeinander folgenden und durch einen Luftspalt voneinander getrennten Linsen werden meist als Luftabstände bezeichnet; in der Figur ist der Luftabstand zwischen den Linsen L1 und L2 mit $d_{L12}$ bezeichnet.

Bei realen optischen Systemen kommt es jedoch aufgrund von Fertigungs- und Montagetoleranzen zu Abweichungen von einer solchen idealen Ausrichtung. Die Figur 2 zeigt beispielhaft für die Linse L5, wie sich eine geringfügige (in der Figur 2 übertrieben dargestellte) Verkippung der Linse L5 in der Linsenfassung auf den Zentrierzustand auswirkt. Es sei hier angenommen, dass die beiden Linsenflächen S51 und S52 der Linse L5 sphärisch sind und Krümmungsmittelpunkte haben, die in der Figur 2 mit K51 bzw. K52 bezeichnet sind. Die Krümmungsmittelpunkte K1 und K2 legen die optische Achse der Linse L5 fest, die in der Figur 2 mit einer gestrichelten Linie 16 angedeutet ist. Infolge dieser Festlegung verläuft die optische Achse 16 stets senkrecht zu den sphärischen optischen Flächen S51, S52 der Linse L5.

Bei asphärischen Linsen ist die optische Achse durch die Krümmungsmittelpunkte des sphärischen Anteils der asphärischen Linsenflächen definiert. Bei einer asphärischen Fläche, die durch die übliche Asphärengleichung

$$z = \frac{ch^2}{1 + \sqrt{1 - (1 + k)\, c^2 h^2}} +$$

$$Ah^4 + Bh^6 + Ch^8 + Dh^{10} + Eh^{12} + Fh^{14} + Gh^{16} + Hh^{18} + Jh^{20}$$

beschrieben wird, ist der Krümmungsmittelpunkt somit durch den Mittelpunkt einer Kugel mit dem Krümmungsradius R gegeben. In der Gleichung bezeichnet z die Pfeilhöhe der betreffenden Fläche parallel zur optischen Achse, *h* den radialen Abstand von der optischen Achse, c = 1/R die Scheitelkrümmung der betreffenden Fläche, *k* die konische Konstante und A, *B,* C, *D, E, F, G, H und* J Asphärenkonstanten.

Die Verkippung der Linse L5 kann beispielsweise dadurch hervorgerufen sein, dass die Linse L5 nicht korrekt in ihre Linsenfassung eingesetzt wurde. Als Ursache hierfür kommt etwa in Betracht, dass der Linsenrand 12 nicht so geschliffen ist, dass seine Symmetrieachse mit der optischen Achse 16 der Linse L5 fluchtet.

Bei einem mehrlinsigen optischen System, wie es in der Figur 1 gezeigt ist, liegen die optischen Achsen der einzelnen Linsen im Allgemeinen je nach Qualität des Zentrierzustands mehr oder weniger unregelmäßig zur Referenzachse 14 verteilt. Dies ist in der Figur 3 beispielhaft für ein optisches System mit vier Linsen mit Krümmungsmittelpunkten K11, K12, K21, K22, K31, K32 und K41, K42 angedeutet; die optischen Achsen der vier Linsen sind mit 161, 162, 163, 164 bezeichnet.

Gelegentlich kann es auch vorkommen, dass zwar die optischen Achsen der Linsen (zumindest annähernd) auf einer gemeinsamen optischen Achse 16' angeordnet sind, diese jedoch nicht mit der Referenzachse 14 fluchtet. Eine solche Konstellation ist in der Figur 4 gezeigt. Außerdem gibt es Fälle wie in der Figur 3 gezeigt, in denen die optische Achse 164 einer Linse zwar nicht mit der Referenzachse 14 fluchtet, jedoch parallel zu dieser verläuft. Einen solchen Zustand bezeichnet man häufig auch als Dezentrierung einer Linse im Gegensatz zu der in der Figur 2 gezeigten Verkippung.

Die optische Achse eines nicht exakt justierten mehrlinsigen optischen Systems ist an und für sich gar nicht eindeutig definiert, da die Krümmungsmittelpunkte in der Regel nicht auf einer Geraden liegen. Unter einer optischen Achse eines solchen Systems wird deswegen im Allgemeinen eine Achse verstanden, von der die Krümmungsmittelpunkte der Linsen im Mittel einen minimalen Abstand haben. Eine so verstandene optische Achse stellt folglich eine Art von Ausgleichsgerade dar, wobei ggf. unterschiedliche Kriterien für die Abstandsminimierung gelten können (z. B. arithmetisches oder quadratisches Mittel oder Gewichtung der Abstände in Abhängigkeit von den Krümmungsradien der betreffenden optischen Flächen).

Will man die Abstände zwischen den Flächen der vier Linsen mit Hilfe eines Kurzkohärenz-Interferometers hochgenau messen, so ergeben sich zwei Probleme:

Zum einen gelingt eine hochgenaue Messung der Abstände mit Hilfe eines Kurzkohärenz-Interferometers nur dann zuverlässig, wenn das von dem Interferometer auf das optische System gerichtete Messlicht senkrecht auf die zu vermessenden optischen Flächen auftrifft. Wenn eine Linse verkippt oder dezentriert ist, so trifft das Messlicht in der Regel nicht mehr senkrecht auf die betreffenden optischen Flächen auf.

Dadurch verringert sich die Intensität des von diesen optischen Flächen in das Interferometer zurückreflektierten Lichts meist so erheblich, dass infolge des dann sehr kleinen Signal-Rausch-Verhältnisses keine oder allenfalls eine vergleichsweise ungenaue Messung möglich ist.

Das zweite Problem besteht darin, dass selbst dann, wenn trotz einer Verkippung oder Dezentrierung von Linsen für die betreffenden optischen Flächen ein ausreichend starkes Interferenzsignal erfasst werden kann, letztlich nicht wie eigentlich gewünscht der Abstand zwischen den Flächen entlang der optischen Achse, sondern entlang einer Richtung gemessen wird, die hierzu einen nicht vernachlässigbaren Winkel einschließt. Die sich daraus ergebenden Abweichungen zwischen den tatsächlichen Abständen entlang der optischen Achse und den gemessenen Abständen können beträchtlich sein, was besonders dann problematisch ist, wenn die Verkippung oder Dezentrierung der Linsen unbemerkt bleibt.

Zur Lösung dieses Problems schlägt die Erfindung vor, den Zentrierzustand des optischen Systems mit einfachen Mitteln zumindest grob zu erfassen und das optische System so gegenüber dem Kurzkohärenz-Interferometer auszurichten, dass die optische Achse des optischen Systems möglichst gut mit einer durch den Messlichtstrahl vorgegebenen Bezugsachse fluchtet. Nach erfolgter Justierung kann das optische System dann beispielsweise so zur Bezugsachse ausgerichtet sein, dass diese eine Art Ausgleichsgrade zu den optischen Achsen der einzelnen Linsen bildet. Bei der in der Figur 3 gezeigten Anordnung fällt dann die Ausgleichsgerade 16' durch die Krümmungsmittelpunkte K11, K12, K21, K22, K31, K32, K41 und K42 mit der durch den Messlichtstrahl vorgegebenen Bezugsachse zusammen. Liegen die optischen Achsen ohnehin auf einer Gerade, die jedoch zur Bezugsachse gekippt ist (vgl. Figur 4), so ist durch die Justierung ein Zustand herzustellen, bei dem durch Verkippung des optischen Systems eine koaxiale Ausrichtung der optischen Achse 16' und der Bezugsachse 14 erreicht wird.

Wie insbesondere das in der Figur 3 gezeigte Beispiel zeigt, lässt sich auch durch eine solche Justierung vor der Abstandsmessung nicht zuverlässig erreichen, dass alle optischen Flächen senkrecht von der Bezugsachse 14 durchstoßen werden. Folglich wird auch der Messlichtstrahl des Kurzkohärenz-Interferometers nicht exakt senkrecht auf alle optischen Flächen des optischen Systems auftreffen. Durch die vorherige Justierung unter Berücksichtigung *aller* optischer Flächen können jedoch vom Prinzip her nie ganz vermeidbare Messfehler, die durch verkippte oder dezentrierte Linsen entstehen, minimiert werden.

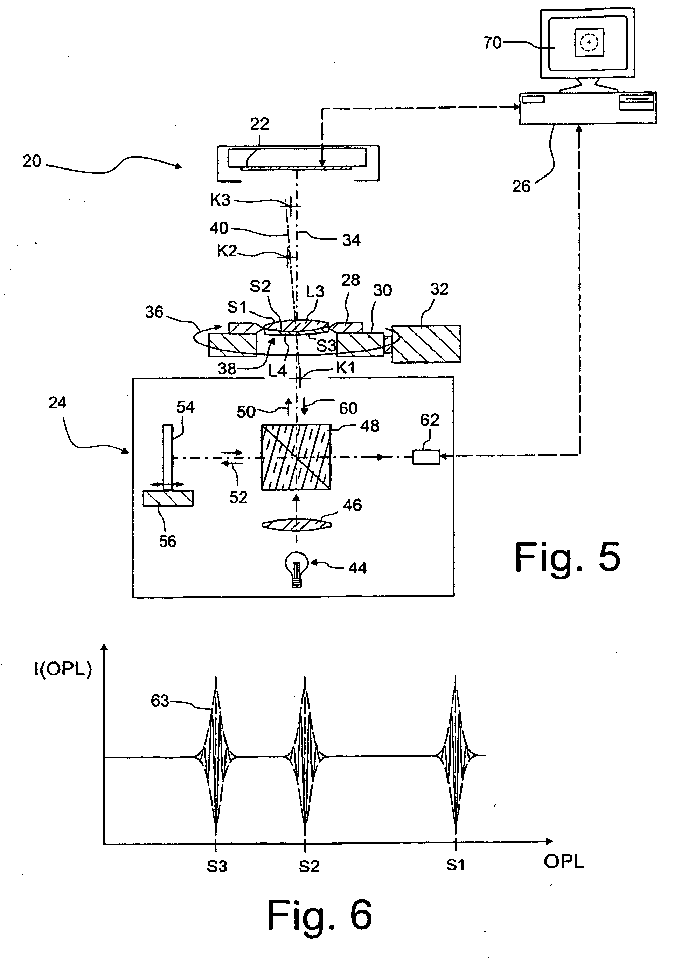

In den folgenden Abschnitten 2 und 3 werden mit Bezug auf die Figuren 5 bis 9 der Aufbau und die Funktionsweise einer erfindungsgemäßen Messvorrichtung gemäß einem Ausführungsbeispiel erläutert. Bei diesem Ausführungsbeispiel wird qualitativ der Zentrierzustand des optischen Systems relativ zur Bezugsachse 14 durch eine Messung in Transmission erfasst. Solche qualitativen Aussagen genügen in der Regel, um das optische System vor Beginn der eigentlichen Abstandsmessung in einem Justiervorgang zur Bezugsachse 14 ausrichten zu können.

Im letzten Abschnitt 4 sind wichtige Verfahrensschritte nochmals zusammengefasst.

*2. Aufbau der Messvorrichtung*

Die in der Figur 5 in einem Meridionalschnitt gezeigte und insgesamt mit 20 bezeichnete Messvorrichtung umfasst einen ortsauflösenden optischen Sensor 22, bei dem es sich z. B. um einen CCD-Sensor oder eine positionsempfindliche Diode (PSD, *Position Sensitive Diode)* handeln kann, und ein Interferometer 24. Zur Messvorrichtung 20 gehört ferner eine Recheneinheit in Form eines Computers 26 sowie eine Prüflingsaufnahme 28, die von einem ringförmigen Drehtisch 30 gehalten wird. Der Drehtisch 30 ist, zusammen mit der darauf angeordneten Prüflingsaufnahme 28, mit Hilfe eines Motors 32 um eine Bezugsachse 34 drehbar, wie dies durch einen Pfeil 36 angedeutet ist. Der Drehtisch 30 bildet zusammen mit dem Motor 32 eine Drehmechanik der Messvorrichtung 20.

Bei dem dargestellten Ausführungsbeispiel hält die Prüflingsaufnahme 28 einen Prüfling 38, bei dem es sich der Einfachheit halber um die in der Figur 1 gezeigte Dublette handelt, die aus den Linsen L3 und L4 zusammengesetzt ist. Die drei optischen Flächen dieses Prüflings 38 sind mit S1, S2 und S3 bezeichnet. Selbstverständlich können auch Prüflinge mit wesentlich mehr Linsen vermessen werden. In der Darstellung der Figur 5 ist unterstellt, dass der Prüfling 38 dezentriert ist, so dass die mit K1, K2 und K3 bezeichneten Krümmungsmittelpunkte der Flächen S1, S2 bzw. S3 nicht auf der Bezugsachse 34 liegen. Vielmehr liegen die Krümmungsmittelpunkte K1, K2 und K3 annähernd auf einer optischen Achse 40 des Prüflings 38, die jedoch zur Bezugsachse 34 verkippt ist.

Das Interferometer 24 ist als Kurzkohärenz-Interferometer ausgebildet und enthält zu diesem Zweck eine im Vergleich zu einer Laserlichtquelle spektral breitbandige Lichtquelle 44, bei der es sich z. B. um eine Superlumineszenzdiode handeln kann. Infolge der vergleichsweise großen spektralen Bandbreite hat das von der Lichtquelle 44 erzeugte Licht eine wesentlich kürzere Kohärenzlänge als Licht, das von Laserlichtquellen erzeugt wird. Alternativ kann eine Laserlichtquelle verwendet werden, die extrem kurze Lichtpulse erzeugt, da auch solche Lichtpulse eine kurze Kohärenzlänge haben.

Von der Lichtquelle 44 erzeugtes Messlicht wird von einer Kollimatorlinse 46 gebündelt und auf einen Strahlteilerwürfel 48 gerichtet, der das Messlicht in einen auf den Prüfling 38 gerichteten Messlichtstrahl 50 und einen Referenzlichtstrahl 52 aufteilt. Die Strahlen 50, 52 sind hier der besseren Erkennbarkeit halber versetzt zu den durch strichpunktierte Linien angedeuteten Achsen eingezeichnet; tatsächlich verlaufen sie jedoch exakt entlang dieser Achsen. Dies gilt insbesondere für den auf den Prüfling 38 gerichteten Messlichtstrahl 50, der sich exakt entlang der Bezugsachse 34 ausbreitet.

Der Referenzlichtstrahl 52 wird von einem Spiegel 54 in sich reflektiert, der mit Hilfe eines Aktuators 56 entlang der Strahlrichtung verfahrbar ist. Auf diese Weise lässt sich die optische Weglänge des Referenzlichtstrahls 52 zwischen dem Strahlteilerwürfel 48 und dem Spiegel 54 verändern.

Der auf den Prüfling 38 gerichtete Messlichtstrahl 50 durchtritt den Prüfling entlang der Bezugsachse 34. Der an den optischen Flächen S1, S2 und S3 jeweils reflektierte Anteil 60 des Messlichtstrahls gelangt zurück auf den Strahlteilerwürfel 48 und wird von diesem teilweise in Richtung eines Photodetektors 62 reflektiert. Dort überlagert sich der reflektierte Anteil 60 des Messlichtstrahls mit dem vom Spiegel 54 reflektierten Referenzlichtstrahl 52.

Liegt die Differenz der optischen Weglängen, die der reflektierte Anteil 60 des Messlichtstrahls und der Referenzlichtstrahl 52 bis zu ihrem Weg auf den Photodetektor 62 zurückgelegt haben, in der Größenordnung der Kohärenzlänge des von der Lichtquelle 44 erzeugten Messlichts, so kommt es zu Interferenzerscheinungen, die vom Photodetektor 62 erfasst werden. Da die Kohärenzlänge des von der Lichtquelle 44 erzeugten Messlichts kurz ist, erzeugt der Photodetektor 62 als Funktion des vom Spiegel 54 zurückgelegten Wegs scharf begrenzte Ausgangssignale, wenn die vorstehend genannte Bedingung erfüllt ist.

Die Figur 6 zeigt beispielhaft einen Graphen, in dem die vom Photodetektor 62 erfasste Intensität I über der optischen Weglänge OPL aufgetragen ist, die der Referenzlichtstrahl 52 zurücklegt. Diese optische Weglänge wird durch Verfahren des Spiegels 54 während der Messung variiert. Immer dann, wenn die optischen Weglängen des reflektierten Anteils 60 des Messlichtstrahls einerseits und des Referenzstrahls 52 andererseits übereinstimmen, lässt sich ein Interferenzsignal am Photodetektor 62 erfassen. Auf der Abszisse sind die Flächen S3, S2 und S1 angegeben, die zu den entsprechenden Interferenzsignalen am Photodetektor 62 geführt haben.

Aus den Positionen der Maxima der Hüllkurven 63 der Messsignale lassen sich unter Berücksichtigung des Gruppenbrechungsindex der Linsenmaterialien die Abstände zwischen den Flächen S1, S2 und S3 mit sehr hoher Genauigkeit bestimmen.

Bei realen Messsignalen liegen zwischen den Hüllkurven 63 im Allgemeinen weitere Interferenzsignale, die z. B. von Mehrfachreflexen innerhalb des Prüflings 38 verursacht sein und teilweise relativ hohe Pegel erreichen können. Damit solche Störsignale die Messung nicht beeinträchtigen, können mit Hilfe von Diskriminatorfenstern, die um die Hüllkurven 63 gelegt werden, die Störsignale ausgeblendet werden. Die Diskriminatorfenster werden vorzugsweise automatisch dort positioniert, wo Interferenzsignale unter Zugrundelegung der Soll-Abstände zwischen den Flächen S1, S2, S3 zu erwarten sind. Damit möglichst viel Messlicht von den Flächen S1, S2, S3 des Prüflings 38 reflektiert und dem Photodetektor 62 zugeleitet werden kann, kann der auf den Prüfling gerichtete Messlichtstrahl 50 mit Hilfe der Kollimatorlinse 46 an den Prüfling 38 angepasst werden.

Weitere Einzelheiten zur Vermessung von Dicken transparenter Körper mit Hilfe eines Kurzkohärenz-Interferometers können der FR 2 803 021 A1 entnommen werden. Im Prinzip geeignete Kurzkohärenz-Interferometer werden u. a. von der Firma FOGALE nanotech, Nimes, Frankreich, angeboten.

*3. Ablauf der Messung*

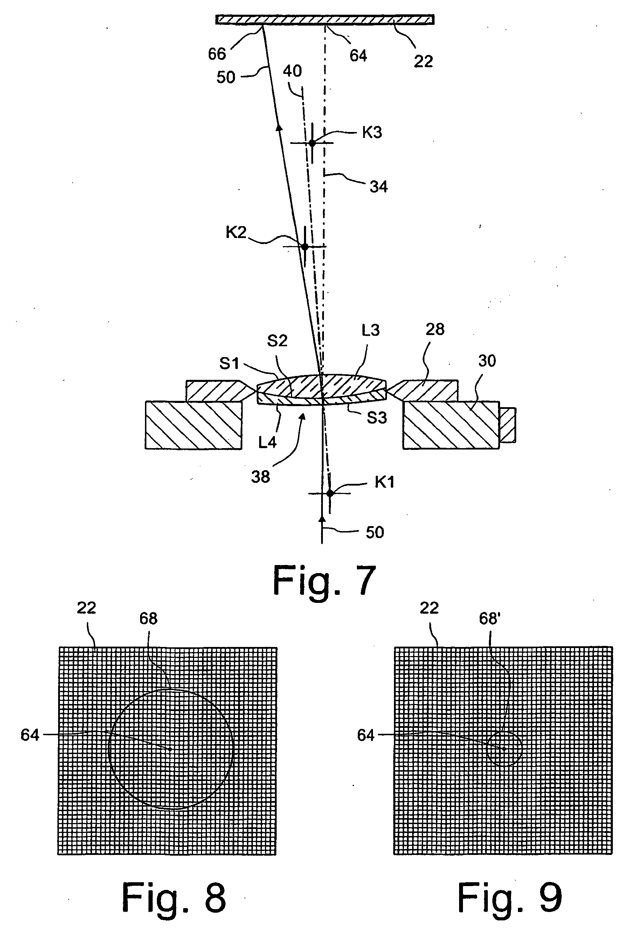

Im Folgenden wird das erfindungsgemäße Messverfahren mit Bezug auf die Figuren 7 bis 9 näher erläutert.

a) Einmalige Ausrichtung

Vorausgesetzt wird zunächst, dass sich der auf den Prüfling 38 gerichtete Messlichtstrahl 50 des Interferometers 24 exakt entlang der Bezugsachse 34 ausbreitet, die durch die Drehachse des Drehtisches 30 definiert ist. Eine solche Justierung erfolgt nur einmalig vor der ersten Inbetriebnahme der Messvorrichtung 20.

Zum Zwecke dieser einmaligen Ausrichtung kann beispielsweise ein Planspiegel über die Öffnung des Drehtischs 30 gelegt werden. Der Referenzarm wird, z. B. durch Verkippen des Spiegels 54, außer Betrieb genommen. Dann werden das Interferometer 24 und der Drehtisch 30 so lange zueinander winkelmäßig ausgerichtet, bis das am Photodetektor erfasste Signal eine maximale Stärke hat. Daraus kann geschlossen werden, dass der Messlichtstrahl 50 am Planspiegel in sich reflektiert wird und der Planspiegel somit senkrecht zur Bezugsachse 34 ausgerichtet ist. Die Drehachse des Drehtischs verläuft somit parallel zur Bezugsachse 34.

In einem nächsten Schritt wird der Planspiegel durch eine Kugellinse ersetzt. Das Interferometer 24 und der Drehtisch 30 werden nun so lange senkrecht zur Bezugsachse 34 zueinander verschoben, bis das Interferenzsignal eine maximale Stärke hat. Daraus kann geschlossen werden, dass der Messlichtstrahl 50 an der Kugellinse in sich reflektiert wird und die Kugellinse somit auf der Bezugsachse 34 zentriert ist. Die Drehachse des Drehtischs verläuft dann koaxial zur Bezugsachse 34.

Die beiden vorstehend erläuterten Justierungsschritte können ggf. (auch mehrfach) wiederholt werden, bis eine optimale Ausrichtung erzielt ist.

Der optische Sensor 22 wird vorzugsweise so justiert, dass sein Koordinaten-Nullpunkt auf der Bezugsachse 34 liegt. Eine solche Justierung kann auch rein rechnerisch durch eine Verlagerung des der Sensorfläche zugeordneten Koordinatensystems erfolgen.

b) Justierung des Prüflings

Zur Erläuterung der Justierung des Prüflings 38, die vor Beginn der eigentlichen Abstandsmessung durchzuführen ist, wird Bezug auf die Figur 7 genommen, die in einer vergrößerten Darstellung wesentliche Komponenten der Messvorrichtung 20 zeigt.

Zunächst wird der vom Interferometer 24 erzeugte Messlichtstrahl 50 auf eine Seite des Prüflings 38 gerichtet. Bei der in den Figuren 5 und 7 angenommenen Verkippung der optischen Achse 40 sind die Flächen S1, S2, S3 so verlagert, dass die Bezugsachse 34 und damit der Messlichtstrahl 50 die Flächen S1, S2, S3 nicht mehr senkrecht durchtritt. Dadurch kommt es an den Flächen S1, S2, S3 zu einer Brechung des Messlichtstrahls 50 mit der Folge, dass dieser den Prüfling 38 unter einem Winkel zur Bezugsachse 34 verlässt. Folglich trifft der Messlichtstrahl 50 auf den optischen Sensor 22 nicht am Durchstoßpunkt 64 der Bezugsachse 34, sondern an einem Ort 66, der vom Durchstoßpunkt 64 beabstandet ist. Dieser Ort 66 wird von dem optischen Sensor 22 erfasst und an den Computer 26 zur Anzeige auf einem Bildschirm 70 übermittelt.

Im Prinzip kann man alleine aus dem Abstand des Ortes 66 vom Durchstoßpunkt 64 qualitative Aussagen über den Zentrierzustand des Prüflings 38 machen. Hierzu ist es lediglich erforderlich, dass die Position des Durchstoßpunkts 64 auf dem optischen Sensor 22 vorab im Wege einer geeigneten Prozedur bestimmt wird. Wird der Prüfling 38 manuell oder mit Hilfe eines (ggf. fremdkraftunterstützten) Manipulators in der Prüflingsaufnahme 28 verkippt und/oder verlagert und beobachtet man dabei den Ort 66, an dem der Messlichtstrahl 50 auf den optischen Sensor 22 auftrifft, so kann man die Justierung so lange fortsetzen, bis der Abstand zwischen dem Ort 66 und dem Durchstoßpunkt 64 minimal ist.

Noch besser gelingt die Justierung (und zwar auch dann, wenn die Lage des Durchstoßpunktes 64 auf dem optischen Sensor 22 nicht bekannt ist), wenn der Prüfling 38 mit Hilfe des Drehtischs 28 um die Bezugsachse 34 gedreht wird. Der Ort 66 bewegt sich dann auf einer Kreisbahn 68 um die Bezugsachse 34 herum, wie dies in der Draufsicht auf den optischen Sensor 22 gemäß der Figur 8 gezeigt ist. Eine optimale Ausrichtung des Prüflings 38 zur Bezugsachse 34 ist dann erreicht, wenn der Radius des auf dem optischen Sensor beschriebenen Kreises 68' minimal ist, wie dies in der Figur 9 gezeigt ist.

Es versteht sich, dass anstelle des Messlichtstrahls 50 auch ein von einer anderen Lichtquelle erzeugter Prüflichtstrahl durch den Prüfling 38 auf den optischen Sensor 22 gerichtet werden kann, um die vorstehende Justierung durchführen zu können.

c) Abstandsmessung

Der Prüfling 38 ist nach Abschluss der vorstehend beschriebenen Justierung so zur Bezugsachse 34 ausgerichtet, dass seine optische Achse 40 mit der Bezugsachse 34 fluchtet. Die Linsen L3 und L4 sind dann nur noch minimal gegenüber der Bezugsachse 34 verkippt. Werden nun die Abstände zwischen den Flächen S1, S2, S3 in der oben mit Bezug auf die Figur 5 geschilderten Weise mit Hilfe des Interferometers 24 gemessen, so durchtritt der Messlichtstrahl 50 die Flächen S1, S2, S3 annähernd senkrecht. Dadurch ist zum einen gewährleistet, dass der von den Flächen S1, S2, S3 reflektierte Messlichtstrahl eine maximale Intensität hat und deswegen am Photodetektor 62 deutlich erkennbare Interferenzsignale bei Überlagerung mit dem Referenzlichtstrahl 52 erzeugt. Zum anderen ist durch die Ausrichtung der optischen Achse 40 des Prüflings 38 zur Bezugsachse 34 gewährleistet, dass die Abstände zwischen den optischen Flächen S1, S2, S3 tatsächlich entlang der optischen Achse des Prüflings 38 gemessen werden.

*4. Zusammenfassung wichtiger Verfahrensschritte*

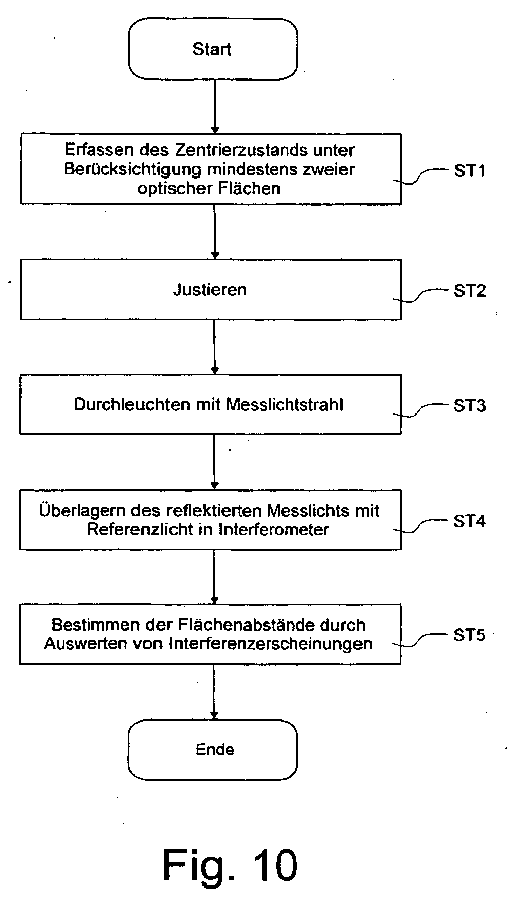

Im Folgenden wird auf die Figur 10 Bezug genommen, die ein Flussdiagramm zeigt, in dem wesentliche Schritte des erfindungsgemäßen Verfahrens aufgeführt sind.

In einem ersten Schritt ST1 wird der Zentrierzustand des Prüflings 38 oder ganz allgemein eines ein- oder mehrlinsigen optischen Systems unter Berücksichtigung mindestens zweier, vorzugsweise aller seiner optischen Flächen erfasst.

In einem zweiten Schritt ST2 wird der Prüfling 38 justiert, und zwar vorzugsweise so, dass seine optische Achse 40 mit der Bezugsachse 38 möglichst exakt fluchtet.

In einem dritten Schritt ST3 wird der Prüfling 38 mit dem Messlichtstrahl 50 durchleuchtet.

In einem vierten Schritt ST4 wird das vom Prüfling 38 reflektierte Messlicht mit Referenzlicht in dem Interferometer 24 überlagert.

In einem fünften Schritt ST5 werden die Flächenabstände durch Auswerten von Interferenzerscheinungen auf dem Photodetektor 62 bestimmt.

**Patentansprüche**

1. Verfahren zur Messung von Abständen zwischen optischen Flächen (S1, S2, S3) eines ein- oder mehrlinsigen optischen Systems (38), umfassend die folgenden Schritte:

   a) Erfassen des Zentrierzustands des optischen Systems (38), wobei ein Prüflichtstrahl (50), der sich entlang einer Bezugsachse (34) ausbreitet, auf das optische System (38) gerichtet wird;
   b) Justieren des optischen Systems (38) unter Berücksichtigung des in Schritt a) erfassten Zentrierzustands;
   c) Durchleuchten des justierten optischen Systems (38) mit einem Messlichtstrahl (50), der sich entlang der Bezugsachse (34) ausbreitet;
   d) Überlagern von Anteilen des Messlichtstrahls (60), die von den optischen Flächen (S1, S2, S3) reflektiert wurden, mit einem Referenzlichtstrahl (52) in einem Interferometer (24);
   e) Bestimmen der Abstände zwischen den optischen Flächen (S1, S2, S3) entlang der Bezugsachse (34) durch Erfassen und Auswerten von Interferenzerscheinungen zwischen den reflektierten Anteilen (60) und dem Referenzlichtstrahl (52)

   **dadurch gekennzeichnet, dass**
   im Schritt a) zur Erfassung des Zentrierzustands der Prüflichtstrahl, nachdem dieser das optische System (38) vollständig durchtreten hat, auf einen ortsauflösenden optischen Sensor (22) auftrifft, wodurch alle optischen Flächen (S1, S2, S3) des optischen Systems (38) bei der Erfassung des Zentrierzustands berücksichtigt werden.

**2.** Verfahren nach Anspruch 1, bei dem das optische System (38) während des Schritts b) um die Bezugsachse (34) gedreht wird.

**3.** Verfahren nach Anspruch 2, bei dem aus der Veränderung des von dem optischen Sensor (22) erfassten Ortes (66) während der Drehung auf eine Abweichung der optischen Achse (40) des optischen Systems (38) von der Bezugsachse (34) geschlossen wird, und bei dem die Justierung in Schritt b) solange fortgesetzt ist, bis die optische Achse (40) des optischen Systems (38) koaxial zu der Bezugsachse (34) verläuft.

**4.** Verfahren nach Anspruch 3, bei dem der von dem optischen Sensor (22) erfasste Ort (66) während der Drehung um die Bezugsachse (34) eine Kreisbahn (68) um die Bezugsachse (34) beschreibt, und bei dem die Justierung in Schritt b) solange fortgesetzt ist, bis die Kreisbahn (68') einen minimalen Radius hat.

**5.** Verfahren nach einem der vorhergehenden Ansprüche, bei dem der Prüflichtstrahl und der Messlichtstrahl (50) von der gleichen Lichtquelle (38) erzeugt werden.

**6.** Vorrichtung zur Messung von Abständen zwischen optischen Flächen (S1, S2, S3) eines mehrlinsigen optischen Systems (38), mit:

a) einem Interferometer (24), das dazu eingerichtet ist, Abstände zwischen den Flächen (S1, S2, S3). entlang einer Bezugsachse (34) zu messen, wobei die Anteile eines sich entlang der Bezugsachse ausbreitenden Messlichtstrahls (50), die von den optischen Flächen reflektiert wurden, mit einem Referenzlichtstrahl (52) überlagert werden, und mit

b) einer Zentrierzustands-Erfassungseinrichtung (44, 22), die dazu eingerichtet ist, den Zentrierzustand des optischen Systems (38) des optischen Systems (38) zu erfassen, wobei die Zentrierzustands-Erfassungseinrichtung eine Prüflichtquelle umfasst, die dazu eingerichtet ist, einen sich entlang der durch den Messlichtstrahl vorgegebenen Bezugsachse (34) ausbreitenden Prüflichtstrahl (50) auf eine Seite des optischen Systems (38) zu richten,

**dadurch gekennzeichnet, dass**

die Zentrierzustands-Erfassungseinrichtung ferner einen ortsauflösenden optischen Sensor (22) umfasst, der dazu eingerichtet ist, den Ort (66) zu erfassen, an dem der Prüflichtstrahl (50), nachdem dieser das optische System (38) vollständig durchtreten hat, auf den optischen Sensor (22) auftrifft, wodurch der Zentrierzustand des optischen Systems (38) unter Berücksichtigung aller optischer Flächen (S1, S2, S3) erfassbar ist.

**7.** Vorrichtung nach Anspruch 6, bei der die Prüflichtquelle (44) eine in dem Interferometer (24) angeordnete Lichtquelle zur Erzeugung von Messlicht ist, das zur Messung der Abstände auf das optische System (38) gerichtet wird.

**8.** Vorrichtung nach Anspruch 6 oder 7, mit einer Drehmechanik (30, 32), die dazu eingerichtet ist, das optische System (38) um die Bezugsachse (34) zu drehen.

**Claims**

**1.** Process for measuring spacings between optical surfaces (S1 S2, S3) of a single-lens or multi-lens optical system (38), comprising the following steps:

a) determining the centering state of the optical system (38), wherein a test light ray (50) which propagates along a reference axis (34) is directed onto the optical system (38);

b) adjusting the optical system (38), taking into consideration the centring state determined in step a) ;

c) transilluminating the adjusted optical system (38) with a measuring light ray (50) which propagates along the reference axis (34);

d) superimposing portions of the measuring light ray (60) that were reflected from the optical surfaces (S1, S2, S3) with a reference light ray (52) in an interferometer (24);

e) determining the spacings between the optical surfaces (S1, S2, S3) along the reference axis (34) by detecting and evaluating interference phenomena between the reflected portions (60) and the reference light ray (52)

**characterised in that**,

in step a) in order to determine the centering state, the test light ray impinges onto a location-resolving optical sensor (22) after passing completely through the optical system (38), wherein all optical surfaces (S1, S2, S3) of the optical system (38) are taken into consideration in the determination of the centering state.

2. Process according to Claim 1, wherein the optical system (38) is rotated about the reference axis (34) during step b).

3. Process according to Claim 2, wherein from the change in the location (66) detected by the optical sensor (22) during the rotation a deviation of the optical axis (40) of the optical system (38) from the reference axis (34) is inferred, and wherein the adjustment in step b) is continued until such time as the optical axis (40) of the optical system (38) runs coaxially with respect to the reference axis (34).

4. Process according to Claim 3, wherein the location (66) detected by the optical sensor (22) during the rotation about the reference axis (34) describes a circular path (68) around the reference axis (34), and wherein the adjustment in step b) is continued until such time as the circular path (68') has a minimal radius.

5. Process according to one of the previous claims, wherein the test light ray and the measuring light ray (50) are generated by the same light source (38).

6. Apparatus for measuring spacings between optical surfaces (S1 S2, S3) of a multi-lens optical system (38), comprising:

a) an interferometer (24) that is configured to measure spacings between the surfaces (S1, S2, S3) along a reference axis (34), wherein the portions of a test light ray (50) propagating along the reference axis, which have been reflected by the optical surfaces, are superimposed with the reference light ray (52), and
b) a centering state determining device (44, 22) that is configured to determine the centering state of the optical system (38), wherein the centering state determining device comprises a test light source that is configured to direct a test light ray (50) propagating along the reference axis defined by the test light ray (34) onto one side of the optical system (38),

**characterised in that**
the centering state determining device further comprises a location-resolving optical sensor (22) that is configured to detect the location (66) at which the test light ray (50) impinges onto the optical sensor (22) after it has passed completely through the optical system (38), whereby the centering state of the optical system (38) can be determined taking into consideration all optical surfaces (S1, S2, S3) of the optical system (38).

7. Apparatus according to Claim 6, wherein the test light source (44) is a light source arranged in the interferometer (24) for the purpose of generating measuring light, which for the purpose of measuring the spacing is directed onto the optical system (38).

8. Apparatus according to Claims 6 or 7, comprising a rotating mechanism (30, 32) that is configured to rotate the optical system (38) about the reference axis (34).

**Revendications**

1. Procédé de mesure de distances entre des surfaces optiques (S1, S2, S3) d'un système optique (38) à une ou plusieurs lentilles, comprenant les étapes suivantes :

a) détection de l'état de centrage du système optique (38), consistant à diriger sur le système optique (38) un faisceau de lumière de contrôle (50) qui se propage le long d'un axe de référence (34) ;
b) ajustement du système optique (38) en tenant compte de l'état de centrage détecté à l'étape a) ;
c) émission à travers le système optique (38) ajusté d'un faisceau de lumière de mesure (50) qui se propage le long de l'axe de référence (34) ;
d) superposition de composantes du faisceau de lumière de mesure (60) qui ont été réfléchies par les surfaces optiques (S1, S2, S3) avec un faisceau de lumière de référence (52) dans un interféromètre (24) ;
e) détermination des distances entre les surfaces optiques (S1, S2, S3) le long de l'axe de référence (34) par détection et évaluation de phénomènes d'interférence entre les composantes réfléchies (60) et le faisceau de lumière de référence (52),

**caractérisé en ce que**
à l'étape a) de détection de l'état de centrage, le faisceau de lumière de contrôle, après avoir traversé complètement le système optique (38), atteint un capteur optique (22) à résolution locale, de sorte que toutes les surfaces optiques (S1, S2, S3) du système optique (38) sont prises en compte dans la détection de l'état de centrage.

2. Procédé selon la revendication 1, dans lequel le système optique (38) est tourné autour de l'axe de référence (34) pendant l'étape b).

3. Procédé selon la revendication 2, dans lequel une déviation de l'axe optique (40) du système optique (38) par rapport à l'axe de référence (34) est déduite de la variation du lieu (66) détecté par le capteur optique (22) pendant la rotation, et dans lequel l'ajustement effectué à l'étape b) est poursuivi jusqu'à ce que l'axe optique (40) du système optique (38) soit coaxial à l'axe de référence (34).

4. Procédé selon la revendication 3, dans lequel le lieu (66) détecté par le capteur optique (22) pendant la rotation autour de l'axe de référence (34) décrit une trajectoire circulaire (68) autour de l'axe de référence (34), et dans lequel l'ajustement effectué à l'étape b) est poursuivi jusqu'à ce que la trajectoire circulaire (68') ait un rayon minimum.

5. Procédé selon une des revendications précédentes, dans lequel le faisceau de lumière de contrôle et le faisceau de lumière de mesure (50) sont générés par la même source de lumière (38).

6. Dispositif de mesure de distances entre des surfaces optiques (S1, S2, S3) d'un système optique (38) à plusieurs lentilles, comprenant :

   a) un interféromètre (24) qui est conçu pour mesurer des distances entre les surfaces (S1, S2, S3) le long d'un axe de référence (34), les composantes d'un faisceau de lumière de mesure (50) se propageant le long de l'axe de référence, qui ont été réfléchies par les surfaces optiques, étant superposées avec un faisceau de lumière de référence (52), et comprenant
   b) un dispositif de détection de l'état de centrage (44, 22) qui est conçu pour détecter l'état de centrage du système optique (38), le dispositif de détection de l'état de centrage comprenant une source de lumière de contrôle qui est conçue pour diriger un faisceau de lumière de contrôle (50) se propageant le long de l'axe de référence (34) prédéfini par le faisceau de lumière de mesure vers un côté du système optique (38),

   **caractérisé en ce que**
   le dispositif de détection de l'état de centrage comprend en outre un capteur optique (22) à résolution locale qui est conçu pour détecter le lieu (66) où le faisceau de lumière de contrôle (50) atteint le capteur optique (22) après avoir traversé complètement le système optique (38), de sorte que l'état de centrage du système optique (38) peut être détecté en tenant compte de toutes les surfaces optiques (S1, S2, S3).

7. Dispositif selon la revendication 6, dans lequel la source de lumière de contrôle (44) est une source de lumière disposée dans l'interféromètre (24) pour générer une lumière de mesure qui est dirigée sur le système optique (38) pour la mesure des distances.

8. Dispositif selon la revendication 6 ou 7, comprenant un mécanisme de rotation (30, 32) qui est conçu pour faire tourner le système optique (38) autour de l'axe de référence (34).

Fig. 1

Fig. 2

Fig. 3

Fig. 4

Fig. 5

Fig. 6

**Fig. 7**

**Fig. 8**

**Fig. 9**

```
                    ┌─────────────────┐
                    │      Start      │
                    └─────────────────┘
                             │
                             ▼
        ┌────────────────────────────────────┐
        │  Erfassen des Zentrierzustands unter │──── ST1
        │  Berücksichtigung mindestens zweier  │
        │        optischer Flächen             │
        └────────────────────────────────────┘
                             │
                             ▼
        ┌────────────────────────────────────┐
        │            Justieren                │──── ST2
        └────────────────────────────────────┘
                             │
                             ▼
        ┌────────────────────────────────────┐
        │    Durchleuchten mit Messlichtstrahl │──── ST3
        └────────────────────────────────────┘
                             │
                             ▼
        ┌────────────────────────────────────┐
        │ Überlagern des reflektierten Messlichts mit │──── ST4
        │   Referenzlicht in Interferometer    │
        └────────────────────────────────────┘
                             │
                             ▼
        ┌────────────────────────────────────┐
        │  Bestimmen der Flächenabstände durch │──── ST5
        │ Auswerten von Interferenzerscheinungen │
        └────────────────────────────────────┘
                             │
                             ▼
                    ┌─────────────────┐
                    │      Ende       │
                    └─────────────────┘
```

# Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2803027 A1
- JP 2004069594 B
- FR 2803021 A1


**In der Beschreibung aufgeführte Nicht-Patentliteratur**

- **R. WILHELM et al.** On-axis, non-contact measurement of glass thicknesses and airgaps in optical systems with submicron accuracy. *Proc. of SPIE,* 2007, vol. 6616, 66163, 1-616312
- **H. HEINISCH et al.** Novel Technique for Measurement of Centration Errors of Complex, Completely Mounted Multi-Element Objective Lenses. *Proc. of SPIE,* 2006, vol. 6288, 628810-1928810-7